# EUROPEAN PATENT APPLICATION

(11) **EP 2 896 292 A1**
(43) Date of publication of application: **22.07.2015**
(21) Application number: 15151180.5
(22) Date of filing: 14.01.2015
(51) Int. Cl.: A01M 1/20, A01G 7/06

(54) **Method and device for eliminating parasites in arecaceae**

(30) Priority: 16.01.2014 IT MI20140044
(71) Applicant: Di Muccio, Pasquale, 18038 Sanremo (Imperia) (IT)
(72) Inventor: Di Muccio, Pasquale, 18038 Sanremo (Imperia) (IT)
(74) Representative: Lunati & Mazzoni S.r.L.

(57) **Abstract**

A device (1) for eliminating parasites in an Arecacea (20) is provided for comprising: a tank (2) for pest control fluid, at least one distribution duct (3), fitted with at least one nozzle (3a) suitable to convey the pest control fluid in correspondence with said top (22) of the Arecacea (20), a supply duct (4), directly connected to the tank (2), a manifold (5), positioned in correspondence with the top (22) and connected to said a distribution duct (3) and to the supply duct (4); an attachment (6) positioned between the tank (2) and the manifold (5); connection means (7) of an integral nature of the manifold (5) and the distribution duct (3) to the Arecacea (20); channelling means (2a) of the pest control fluid from the tank (2) to the nozzle (3a).

## Description

The present invention relates to a method and device for eliminating parasites in Arecaceae of the type specified in the preamble of the independent claims.

The problem of infestation of the Arecaceae by dangerous pests and weeds is currently known of.

The Arecaceae are plants, commonly known as palm trees, with a stem, a capital, on the top of the stem and a plurality of leaves connected to the capital.

They are found primarily in seaside resorts and in warm countries.

Said Arecaceae are prey to a parasite called Rhynchophorus ferrugineus, commonly called the red palm weevil, or just red weevil.

The Red weevil is a beetle that settles in the Arecaceae, lays the larvae inside them and feeds on the plant tissue composing them.

The Red weevil, native to southern Asia and Melanesia, has appeared in the Mediterranean over the past 10-15 years and is a serious threat to the Mediterranean Arecaceae, particularly the Arecaceae of the Phoenix canariensis species present for example in Italy and in Spain.

Many attempts to eliminate the red weevil have recently been undertaken, in particular by means of insecticide sprayed on the palms.

The prior art described above has several significant drawbacks.

In fact, the insecticide must be sprayed repeatedly, for periods of several months or even years.

Consequently, such treatment is extremely expensive.

In addition the insecticide has proved ineffective in many cases.

Another major drawback is the fact that the distribution of the insecticide with standard spraying equipment constitutes a source of dispersion of the product in the environment, so-called product drift.

Another major drawback is the fact that the absorption of plant protection products on the market, namely insecticides, but not only, is very difficult because the leaves of the Arecaceae have very tough and hydrophobic teguments which make the entrance of the product into the sap system practically impossible.

In this situation the technical purpose of the present invention is to devise a method and device for eliminating parasites in Arecaceae which is able to substantially overcome the drawbacks mentioned above.

Within the sphere of said technical purpose one important aim of the invention is to provide a method and device for eliminating parasites in Arecaceae which is economical.

Another important purpose of the invention is to devise a method and a device for eliminating parasites in Arecaceae which is effective and which permits the resistance of said device to wind and bad weather.

The technical purpose and specified aims are achieved by a method and device for eliminating parasites in Arecaceae as claimed in the appended independent claims.

Preferred embodiments are evident from the dependent claims.

The characteristics and advantages of the invention are clearly evident from the following detailed description of a preferred embodiment thereof, with reference to the accompanying drawings, in which:

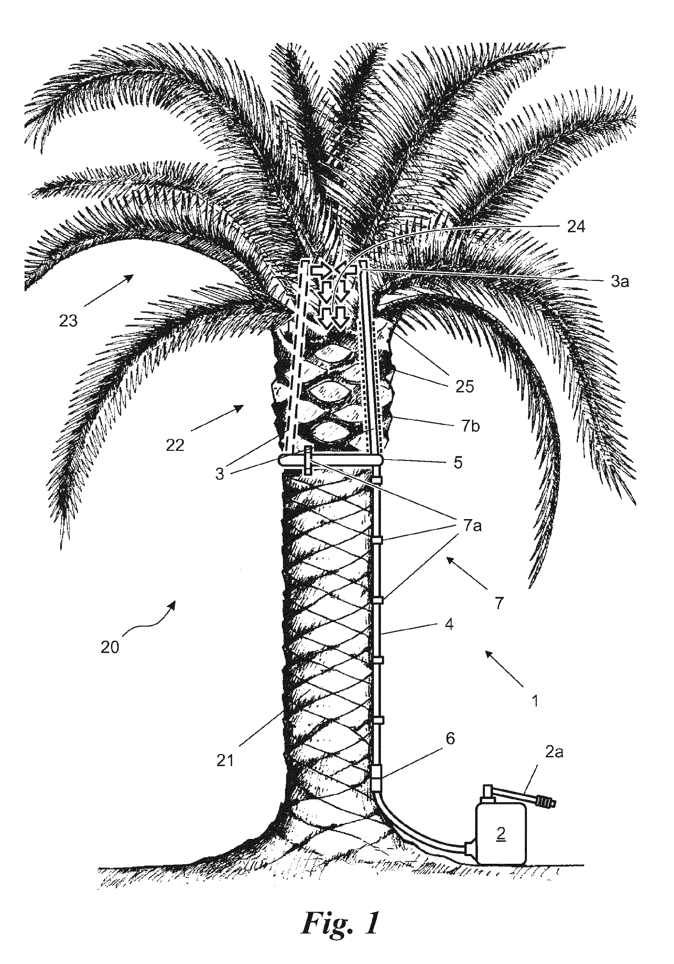

**Fig. 1** shows a device for eliminating parasites according to the invention, applied to an Arecacea.

With reference to said drawings, reference numeral 1 globally denotes the device for eliminating parasites according to the invention.

It is applied, in situ to an Arecacea **20** commonly known as a palm, in particular to a palm of the Phoenix canariensis species.

As is known, said Arecacea 20 comprises a stem **21,** a top **22** of the stem, also known as capital.

At the top 22 the leaves **23** are connected, which when dead and partly dried and partly fallen, take the name in the jargon of heels **25.** The heels 25 are the portions proximal to the capital of the leaves, removed either because senescent or to provide light to the plant. They are connected to the plant but are no longer functional since the sap no longer flows through them.

The top 22 comprises a central apical bud **24,** composed of the upper portion of the top 22 or capital, which faces substantially upwards.

The device 1 for eliminating parasites comprises, in brief, a tank **2** for pest control fluid, at least one distribution duct **3,** fitted with at least one nozzle **3a** suitable to convey the pest control fluid in correspondence with said top 22, a supply duct **4,** directly connected to said tank 2, a manifold **5,** positioned in correspondence with the top 22 and connected to the distribution ducts 3 and to the supply duct 4.

More in detail the tank 2 is preferably a polymeric container associated with channelling means **2a** of the pest control fluid from the tank 2 to the nozzle 3a. The latter are duly formed of an apparatus to increase the pressure inside said tank 2, appropriately of the manual type and for example of the type used for spraying insecticides on plants such as vines and the like. Alternatively the channelling means 2a are motorised. In this case, the tank and the motor are preferably motorised.

The supply duct **4** is directly connected, in a fluid through connection, to the tank 2. It is also appropriately integrally connected to the trunk 21 of the Arecaceae 20 by connection means 7, such as, in particular U-shaped attachment collars **7a,** preferably made of polymer. The supply channel is preferably made of flexible polymer material, such as elastomers and the like, and appropriately has a diameter between 0.5 cm and 2 cm.

The manifold 5 is connected in fluid through connection to the supply duct 4. It is appropriately wound at the top 22 of the Arecacea 20 and more appropriately at the base of the same. The manifold 5 appropriately extends for the totality of the circumference of said top 22 and thus covers a closed path so as to be able to supply distribution channels in any position along said circumference. The manifold 5 has a diameter similar to the diameter of the channel 5 or even greater and is appropriately in the same material. It is appropriately made from high-strength polymer material, such as HDPE or similar. It is also preferably composed of a plurality of portions, preferably two, mutually connected by fittings, preferably by quick-fit attachments similar or identical to the attachment 6 described below.

In addition, between the manifold 5 and the tank 2 an attachment 6 is advantageously placed, preferably a quick-fitting, such as a quick-coupler of the PN 16 type. Said fitting is preferably arranged along the supply channels 4 at or near the tank 2, i.e. at a distance less than about 1 m therefrom, so that the tank 2 can be advantageously connected and disconnected quickly and does not have to remain placed on the Arecacea 20.

The distribution channels 3 are preferably a plurality of channels, most preferably two, arranged in diametrically opposite positions. Each of them is connected in fluid through connection with the manifold 5.

Appropriately they consist of tubes, preferably rigid and preferably of metal, in particular in stainless steel or similar, so that they can maintain their position. Said tubes are moreover preferably straight and preferably have a diameter between 0.5 cm and 2 cm, and preferably a length between 0.5 m and 1.5 m and more preferably between 0.8 m and 1.2 m.

Each distribution channel 3 comprises a nozzle 3a composed of an incision on the side wall thereof, preferably having a height, in an axial direction, of 1.1 mm or between 0.5 mm and 2 mm and a width ranging from an angular fraction of 60° to 180°, or of a different ejector nozzle. The nozzles 3a are suitable to convey the pest control fluid in correspondence with said central apical bud 24. In fact the applicant has verified that this is the place where the red weevil spends its entire life.

The channels 3 lastly comprise positioning means, such as a simple notch, for the correct positioning of the nozzle, next to the manifold 5.

Preferably the distribution channels 3 are inserted in the plant by connection means 7, such as, in particular, holes 7b made in the heels, 25 slightly superior in diameter to the diameter of the distribution channels 3 and suitable to connect the distribution channels 3 to the top 22 of the Arecacea 20.

The invention also comprises a new method for eliminating parasites from the Arecacea 20, in particular from the Phoenix canariensis, appropriately implemented by means of the device 1 described.

Said method consists of firmly attaching at least one distribution channel 3 of the type described above to the Arecacea 20, and preferably a plurality of such distribution channels 3 each fitted with at least one nozzle 3a suitable to channel the pest control fluid at the top 22, and preferably at the central apical bud 24.

The method further consists of also firmly joining to the Arecacea 20 the supply channel 4, preferably of the type described, the manifold 5, preferably of the type described and placed at the top 22 connected to the distribution channels 3 and the supply channel 4, as previously described.

The method further consists of connecting, in a detachable manner, the tank 2, preferably of the type described, to the supply channel 4.

The method lastly consists of channelling the pest control fluid from the tank 2 to the nozzles 3a, preferably through the channelling means described, so that it reaches the top 22 and in particular the central apical bud 24.

The invention achieves some important advantages.

In fact, the said device 1 and method permit the elimination of the red weevil, which, as verified by the applicant, lives mainly at the top 22 and more specifically in the central apical bud 24.

Said structure in fact makes it possible to reach said central apical bud 24 quickly and economically. Consequently the insecticide product or similar is not blocked by the leaves of the Arecacea 20. Furthermore said structure, as a result of the type of attachment described, is firmly bound to the Arecacea 20 and is not subject to movements caused by wind or other weather phenomena.

In addition the attachment 6 permits a rapid connection of the tank 2, and thus simple, rapid and economical performance of the method.

In addition said device substantially prevents drift phenomena of the insecticide product or similar in the environment.

Variations may be made to the invention without departing from the scope of the inventive concept expressed in the independent claims and by their techn i-cal equivalents. In said sphere all the details may be replaced with equivalent elements and the materials, shapes and dimensions may be as desired.

## Claims

1. Device (1) for eliminating parasites in an Arecacea (20), said Arecacea (20) comprising: a stem (21), a top (22) of said stem, leaves (23) connected to said top (22), said device being **characterised in that** it comprises: a tank (2) for pest control fluid, at least one distribution duct (3) fitted with at least one nozzle (3a) suitable to convey said pest control fluid in correspondence with said top (22), a supply duct (4), directly connected, in a fluid through connection, to said tank (2), a manifold (5), positioned in correspondence with said top (22) and connected, in fluid through connection, to said at least one distribution duct (3) and to said supply duct (4); an attachment (6) positioned between said tank (2) and said manifold (5); connection means (7) of an integral nature of said manifold (5) and of said at least one distribution duct (3) to said Arecacea (20); channelling means (2a) of said pest control fluid from said tank (2) to said at least one nozzle (3a).

2. Device (1) according to claim 1, comprising a plurality of distribution ducts (3) each connected to said manifold (3).

3. Device (1) according to one or more of the previous claims, in which said attachment (6) is a quick-fit type attachment.

4. Device (1) according to one or more of the previous claims, in which said attachment (6) is positioned next to or in correspondence with said tank (2).

5. Device (1) according to one or more of the previous claims, in which said top (22) comprises a central apical bud (24), and in which said nozzles (3a) are suitable to convey said pest control fluid in correspondence with said central apical bud (24).

6. Device (1) according to one or more of the previous claims, in which said Arecacea (20) comprises peduncles (25), composed of portions of desiccated leaves, and wherein said connection means (7) comprise holes (7b) in said peduncles (25), suitable to connect said at least one distribution channel (5).

7. Device (1) according to one or more of the previous claims, in which said distribution ducts (3) are composed of rigid pipes.

8. Device (1) according to one or more of the previous claims, in which said manifold (5) extends for the totality of the circumference of said top (22) and thus covers a closed circuit.

9. Device (1) according to one or more of the previous claims, in which said Arecacea (20) is a Phoenix canariensis.

10. Method for eliminating parasites in an Arecacea (20), said Arecacea (20) comprising: a stem (21), a top (22) of said stem, leaves (23) connected to said top (22), **characterised in that** it consists of: firmly attaching to said Arecacea (20): at least one distribution duct (3) fitted with at least one nozzle (3a) suitable to convey said pest control fluid in correspondence with said top (22), at least one supply duct (4), a manifold (5), positioned in correspondence with said top (22) and connected, in fluid through connection, to said at least one distribution duct (3) and to said supply duct (4); in connecting in a detachable manner a tank (2) for pest control fluid directly in fluid through connection to said supply duct (4); in channelling said pest control fluid from said tank (2) to said at least one nozzle (3a).
